# EUROPÄISCHE PATENTSCHRIFT

(11) **EP 1 483 524 B1**
(45) Veröffentlichungstag und Bekanntmachung des Hinweises auf die Patenterteilung: **31.08.2005**
(21) Anmeldenummer: 03743364.6
(22) Anmeldetag: 01.03.2003
(51) Int. Cl.: F16L 37/36

(54) **ANSCHLUSSKUPPLUNG**
CONNECTION COUPLING
COUPLAGE DE CONNEXION

(30) Priorität: 02.03.2002 DE 20203248 U
(43) Veröffentlichungstag der Anmeldung: 08.12.2004
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: PCT/EP2003/002110
(87) Internationale Veröffentlichungsnummer: WO 2003/074309

(56) Entgegenhaltungen:
- WO-A-00/52378
- WO-A-98/05898
- US-A- 3 680 591
- US-A- 6 035 894

## Beschreibung

Die Erfindung betrifft eine Anschlußkupplung für die Übertragung von gasförmigen und/oder flüssigen Fluiden, insbesondere zum Befüllen von Fahrzeug-Gastanks.

Mit derartigen Anschlußkupplungen soll eine sichere und schnell anschließbare Übertragung eines Fluids von einer Druckquelle, beispielsweise von einer Betankungsanlage aus zu einem Fahrzeug erreicht werden. Besonders wichtig ist hierbei die einfache und sichere Bedienbarkeit, so daß auch bei hohen Betankungs- und Anschlußdrücken von 200 bar und mehr eine problemlose Handhabung ermöglicht wird.

Eine derartige Anschlußkupplung ist in der WO 98/05898 der Anmelder beschrieben, wobei die Schnellanschlußkupplung ein Gehäuse mit einem Fluideinlaß und einem Fluidauslaß aufweist, sowie mehrere Ventile vorgesehen sind, um eine sichere Abdichtung der Schnellanschlußkupplung bis zur vollständigen Herstellung der Verbindung zu gewährleisten. Diese Ventile werden dabei nach Ansetzen der Schnellanschlußkupplung durch Drehen eines Steuerungshebels in einer bestimmten vorgegebenen Reihenfolge geschaltet, wobei zuerst durch das Aufschieben der Schnellanschlußkupplung an einen Anschlußnippel das Auslaßventil geöffnet wird, dann bei weiterer Bewegung des Steuerungshebels die als Verriegelungselemente dienenden Spannzangen geschlossen werden und schließlich das Einlaßventil geöffnet wird. Der Steuerungshebel ist hierbei über eine Exzenterwelle mit der Schiebehülse für die Beaufschlagung der Spannzangen und mit einem Dichtkolben in Eingriff, der auch den Fluideinlaß nach erfolgtem Anschluß der Steckkupplung freigibt. Zudem ist ein Entlüftungsventil vorgesehen, das den Druckausgleich vor Abnehmen der Steckkupplung ermöglicht, so daß selbst bei hohen Drücken keine Rückstoßgefahr besteht.

Obwohl hierdurch eine besonders sichere Anschlußmöglichkeit geschaffen wird, weist diese bekannte Anschlußkupplung noch einen relativ hohen Bauaufwand und einen relativ großen Platzbedarf auf, insbesondere bei Anschluß einer Entlüftungsleitung zusätzlich zur Befüll- bzw. Zuführleitung.

Demzufolge liegt der Erfindung die Aufgabe zugrunde, eine Anschlußkupplung, insbesondere als Schnellanschlußkupplung der eingangs genannten Art zu schaffen, die bei einfachem und kompaktem Aufbau eine besonders sichere Handhabung ermöglicht.

Diese Aufgabe wird gelöst durch eine Anschlußkupplung gemäß den Merkmalen des Patentanspruches 1. Bevorzugte Weiterbildungen der Erfindung sind Gegenstand der abhängigen Ansprüche.

Die vorgeschlagene Anschlußkupplung eignet sich insbesondere für den Einsatz bei einer Schnellanschlußkupplung zur Betankung von Erdgasfahreugen, wobei sich eine besonders einfache und kompakte Bauweise ergibt, da das Entlüftungsventil in Form einer Dichtscheibe besonders kleinbauend und stabil ausgebildet ist und somit platzsparend in die Anschlußkupplung integriert werden kann. Insbesondere weist die Dichtscheibe an ihren Stirnflächen in bevorzugter Ausführungsform ringbundartig abgesetzte Dichtkanten auf, die in gegenüberliegenden, inneren Absätzen der Ventilschieber eingreifen. Dadurch wird auch bei hohen Drücken ein Aufquellen der Dichtkanten vermieden, so daß sich eine besonders sichere und verschleißarme Abdichtung ergibt.

Dies wird auch dadurch gefördert, daß die Dichtscheibe in bevorzugter Ausführung bei ihrer Axialbewegung an Außenumfang geführt wird, so daß ein Verkanten nicht auftreten kann. Insbesondere wird durch diese Führung in Axialrichtung vermieden, daß die Dichtscheibe und deren Dichtkanten durch "schiefes" Auftreffen an Gegenstück beschädigt werden können.

Durch innerhalb der Anschlußkupplung integrierte Durchtrittsschlitze, insbesondere an einem Führungsteil bzw. einer Ventilsitzhülse, wird am Umfang der Dichtscheibe ein rascher Durchlaß zu einem Druckausgleichsraum erreicht und somit eine vollständige Entlüftung der Anschlußkupplung zu einem Entlüftungsschlauch hin erreicht. Die Zuführleitung (insbesondere ein Hochdruckschlauch) und die dazu parallele Entlüftungsleitung, bevorzugt in Form einer Gas-Rückführleitung, werden dabei bevorzugt am Einlaßbereich in kompakter Weise von einer auch als Handgriff dienenden Gehäusekappe zumindest teilweise umhüllt. Hierdurch ist eine einfache Handhabbarkeit gewährleistet, so daß die Schnellanschlußkupplung auch von Laien problemlos angeschlossen werden kann.

Der die Dichtscheibe umgebende Druckausgleichsraum ist hierbei bevorzugt als Ringraum ausgebildet, der über eine im Einlaßbereich vorgesehene Bohrung mit der Entlüftungsleitung in Verbindung steht. Hierdurch wird eine einfache und kompakte Verbindung des Druckausgleichsraumes mit der rückseitigen Entlüftungsleitung geschaffen. Die Dichtscheibe wird bevorzugt aus PTFE oder Kupfer oder einem ähnlichen verschleißbeständigen Material hergestellt, wobei durch die Führung am Außenumfang eine Verpressung der Dichtflächen vermieden wird. Die Dichtscheibe kann auch aus einem Verbundmaterial mit reibungsarmen Kunststoffscheiben gebildet sein, wobei durch die Führung in Axialrichtung und die korrespondierende Einpassung der Dichtkanten auch bei hohen Drücken ein übermäßiger Verschleiß sicher verhindert wird.

Nachfolgend wird ein Ausführungsbeispiel anhand der beiliegenden Zeichnung näher erläutert und beschrieben. Hierin zeigt:
- Fig. 1: eine Seitenansicht einer Anschlußkupplung mit einem integrierten Einlaß- und Entlüftungsventil, wobei die Anschlußkupplung im Längs-Halbschnitt und in angeschlossener Stellung an einen Anschlußnippel dargestellt ist; und
- Fig. 2: eine vergrößerte Darstellung des Einlaßbereiches der Anschlußkupplung gemäß Fig. 1.

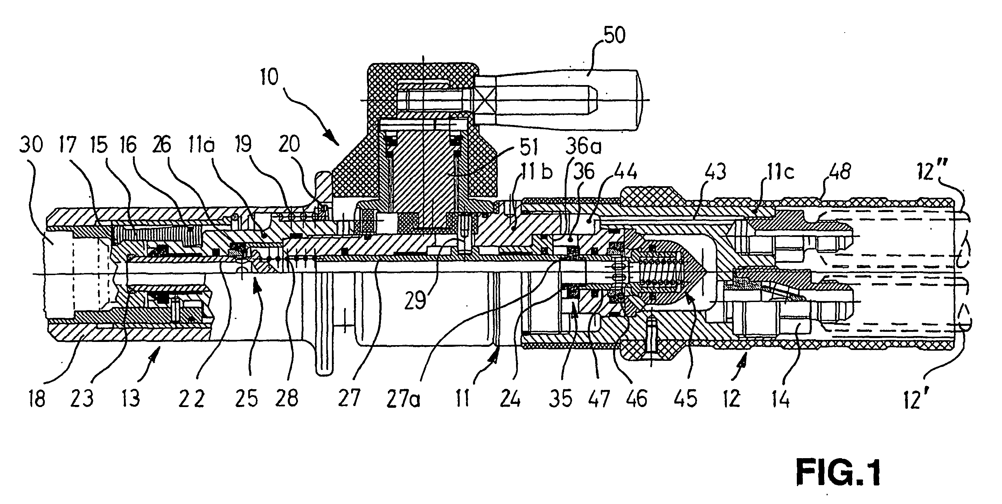

In Fig. 1 ist ein bevorzugtes Ausführungsbeispiel einer Anschlußkupplung 10 in Form einer sog. Schnellanschlußkupplung dargestellt, die an einen hier links angedeuteten Anschlußnippel 30 angekuppelt ist. Die Anschlußkupplung 10 weist ein rohrförmiges Gehäuse 11 mit mehreren, miteinander verschraubten Gehäuseteilen 11a, 11b und 11c auf, wobei das hier rechte Gehäuseteil 11c als Einlaßbereich 12 dient und der linke Bereich als Auslaß 13 für die Weiterleitung des zu übertragenden Fluids an den Anschlußnippel 30. Der Einlaßbereich 12 weist einen Anschlußadapter 14 auf, an den über ein Gewinde eine Fluidleitung 12' zur Zuführung des zu übertragenden Fluids angeschlossen werden kann. Der Anschlußadapter 14 mit einer eingesetzten Filterhülse kann hierbei in Anpassung an das zu übertragende Fluid, insbesondere an die jeweils gewünschten Zuführdruckwerte, Durchlaßquerschnitte usw. entsprechend gestaltet sein.

Im Bereich des Auslasses 13 sind mehrere, in Rohrform angeordnete, längliche Spannzangen 15 vorgesehen, die kurz vor dem Aufstecken auf den Anschlußnippel 30 radial nach außen aufgespreizt werden können. Die länglichen Spannzangen 15 sind dabei - wie durch den eingangs genannten Stand der Technik bekannt - durch eine Ringfeder 16 vorgespannt, so dass die Spannzangen 15 radial nach außen aufspreizbar sind. An dem hier linken äußeren Ende mit nach innen abgekröpften Flächen weisen die Spannzangen 15 jeweils korrespondierend zu einem nutförmigen Anschlußprofil des Anschlußnippels 30 ausgebildete formschlüssige Eingriffsprofile 17 auf.

Um die Spannzangen 15 herum ist eine äußere Schiebehülse 18 vorgesehen, die an dem zylindrischen Außenmantel des hier linken Gehäuseteils 11a geführt ist und mit einer Druckfeder 19 in Richtung vom Anschlußnippel 30 weg vorgespannt ist. Die Druckfeder 19 stützt sich hierbei an einen Abstützring 20 ab und schiebt somit die Schiebehülse 18 zu einem Steuerungs- oder Betätigungshebel 50 mit einer Exzenterwelle 51 hin. Deren Aufbau ist im eingangs genannten Stand der Technik ebenfalls näher beschrieben, so dass hier auf eine weitere Erläuterung verzichtet werden kann. Es sei aus Gründen der Vollständigkeit lediglich noch erwähnt, dass im Bereich des Auslasses 13 innen ein das Auslaßventil bildender Dichtkolben 22 geführt ist, der an seiner vorderen Stirnseite eine konische Dichtfläche 23 zur Anlage an einem Dichtring des Anschlußnippels 30 aufweist, so dass das im wesentlichen entlang der Zentralachse der Anschlußkupplung 10 strömende gasförmige und/oder flüssige Fluid nicht nach außen hin austreten kann.

Das am Dichtkolben 22 vorgesehene Auslaßventil 25 dichtet mittels eines Dichtringes als Ventilsitz 26 gegenüber dem Dichtkolben 22 in geschlossener Stellung ab. Das Auslaßventil 25 ist hierbei von einer Druckfeder 28 beaufschlagt, die sich zur rechten Seite hin auf einen Schaltschieber 27 abstützt. Durch dieses Auslaßventil 25 wird sichergestellt, dass in der hier nicht dargestellten abgekuppelten Position bzw. bis kurz vor dem Anschluß der Anschlußkupplung 10 an den Anschlußnippel 30 das durch den Anschlußadapter 14 zugeführte Fluid nicht ausströmen kann. Der Schaltschieber 27 gegenüber dem Auslaßventil 25 wird beim Abkuppeln der Anschlußkupplung 10 vom Anschlußnippel 30 entlang der Anschlußkupplungs-Achse verschoben und bildet so zusammen mit einer Dichtscheibe 24 ein Entlüftungsventil 35. Das Entlüftungsventil 35 und der Schaltschieber 27 werden hierbei durch Verschwenken des Steuerungshebels 50 betätigt, da die Exzenterwelle 51 mit dem Schaltschieber 27 gekoppelt ist, z..B. durch Eingriff über einen Bolzen 29.

Wie aus der hier dargestellten Anschlußstellung der Anschlußkupplung 10 ersichtlich ist, wird beim Aufstecken auf den Anschlußnippel 30 das Eingriffsprofil 17 der Spannzangen 15 mit dem Anschlußnippel 30 in Eingriff gebracht. Durch Betätigung (Verschwenken um ca. 180°) des Steuerungshebels 50 in die hier gezeigte Position wird die Schiebehülse 18 über die Spannzangen 15 geschoben und diese somit verriegelt. Bei Druckbeaufschlagung (Beginn des Betankungsvorganges) wird der Dichtkolben 22 zunächst (auch unter Wirkung der Feder 28) nach links verschoben. Bei Anlage an der Dichtfläche 23 wird unter Verschiebung des Dichtkolbens 22 nach rechts zudem der Ventilsitz 26 am Dichtkolben 22 und damit das Auslaßventil 25 geöffnet. Dabei hat das Eingriffsprofil 17 an dem korrespondierend ausgebildeten Anschlußprofil des Anschlußnippels 30 bereits eingegriffen, wobei durch die Axialbewegung der Schiebehülse 18 diese über die radial äußeren Enden der Spannzangen 15 greift, so dass diese am Anschlußnippel 30 formschlüssig gehalten werden.

Zum Lösen der Anschlußkupplung 10 und damit dem Zurückführen der hier dargestellten Anschlußstellung in die Öffnungsstellung wird die Schiebehülse 18 nach Verdrehen des Steuerungshebels 50 von der Druckfeder 19 zurückgeschoben. Nach einem kurzen Weg können die Spannzangen 15 sich wieder radial nach außen aufspreizen. Da vorher der Fluiddruck unterbrochen wurde (z. B. durch Schließen eines Betankungsventils), wird zudem der Dichtkolben 22 hier nach rechts in Richtung zum Einlaßbereich 12 hin verschoben, sowie das Auslaßventil 25 am Ventilsitz 26 geschlossen.

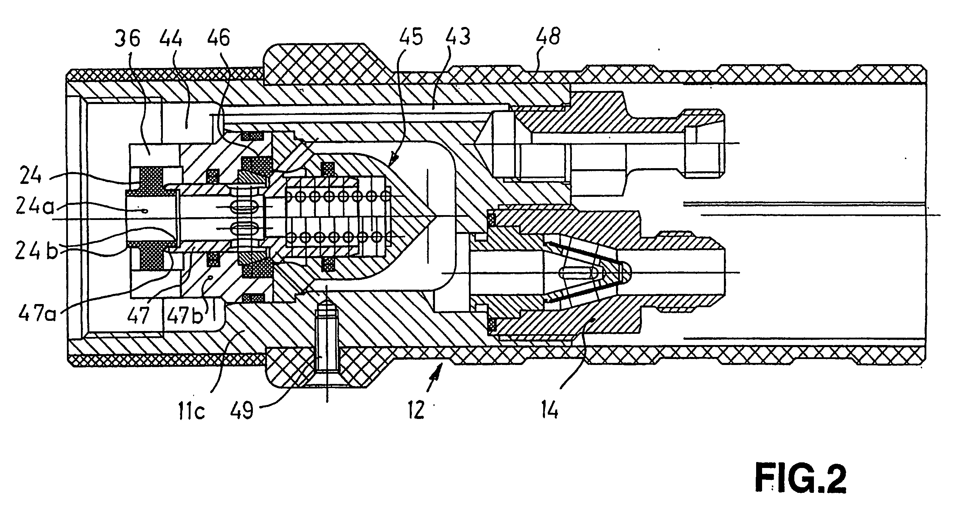

Im Einlaßbereich 12 ist weiterhin ein Einlaßventil 45 mit einem zugeordneten Ventilsitz 46 zentral im Gehäuse 11 bzw. dem Gehäuseteil 11c der Anschlußkupplung 10 angeordnet, wie dies vergrößert in Fig 2 dargestellt ist. Das Einlaßventil 45 ist ebenfalls durch den Steuerungshebel 50 und seine Exzenterwelle 51 durch die Koppelung mit dem Schaltschieber 27 axial verschiebbar. Dieser Schaltschieber 27 verschiebt nämlich über die Dichtscheibe 24 in der gezeigten Anschlußstellung einen Ventilschieber 47 des Einlaßventils 45 in die Öffnungsstellung, so dass das vom Einlaßbereich 12 zuströmende Fluid durch den Ventilschieber 47 und einen Durchlaß 24a in der Dichtscheibe 24 sowie den rohrförmigen Schaltschieber 27 zum Auslaß 13 hin fließen kann.

Beim Lösen der Anschlußkupplung 10 wird durch Verdrehen des Steuerhebels 50 der Schaltschieber 27 (hier über den Bolzen 29) nach links verschoben, so dass sich auch die Dichtscheibe 24 aus dem Dichteingriff lösen kann. Hierbei trennen sich die Dichtkanten 24b der Dichtscheibe 24 und die innenseitigen Absätze 27a bzw. 47a des Schaltschiebers 27 bzw. Ventilschiebers 47 voneinander, so dass sich der Druck innerhalb der Anschlußkupplung 10 über Durchtrittschlitze 36 zu einem Druckausgleichsraum 44 hin abbauen kann. Die Durchtrittsschlitze 36 sind bevorzugt als Einfräsungen in einem Führungsteil 47b des Ventilschiebers 47 ausgebildet, während der Druckausgleichsraum 44 als absatzartiger Ringraum in einer Abstufung am Gehäuseteil 11c um die Dichtscheibe 24 herum ausgebildet ist. Der Druckausgleichsraum 44 wird hierbei durch mehrere Dichtungen abgedichtet. Die Dichtscheibe 24 kann sich bei dieser Axialbewegung jedoch nur bis zu einem Anschlag 36a am hier linken Rand der Durchtrittsschlitze 36 bewegen, wobei die Dichtscheibe 24 in Axialrichtung exakt an Stegen zwischen den Durchtrittsschlitzen 36 geführt ist. Hierdurch werden auch beim Kontakt mit den Innenabsätzen 27a und 47a die Dichtkanten 24b der Dichtscheibe 24 nicht verpreßt, sondern exakt in Dichtposition geführt.

Wie oben erwähnt, wird somit beim Abkuppeln der Anschlußkupplung das Entlüftungsventil 35 durch die Exzenterwelle 51 und den Schaltschieber 27 geöffnet. Hierdurch strömt noch anstehendes Druckmedium über den Druckausgleichsraum 44 zu einer Entlüftungsbohrung 43, die parallel zu der zentralen Fluidpassage (durch die Ventile 45, 35 und 25 hindurch) im Gehäuseteil 11c der Anschlußkupplung 10 verläuft. Die Entlüftungsbohrung 43 mündet in der zweiten Leitung 12'', die bevorzugt als Rückführschlauch ausgebildet ist und ebenso wie die Zuführleitung von einer Gehäusekappe 48 umgrenzt ist. Diese Gehäusekappe 48 ist dabei mit einer Querschraube 49 drehfest mit dem Gehäuseteil 11c verbunden, um als Handgriff für eine einfache Handhabung dienen zu können. Die Entlüftungsleitung 12" und die am Adapter 14 angeschlossene Fluidleitung 12' verlaufen somit immer zumindest weitgehend parallel zueinander.

## Patentansprüche

1. Anschlußkupplung für die Übertragung von gasförmigen und/oder flüssigen Fluiden, insbesondere zum Befüllen von Fahrzeug-Gastanks, mit einem ein Einlaßventil (45) aufweisenden Einlaßbereich (12), der mit einer Zuführleitung (12') und einer Entlüftungsleitung (12") verbunden ist sowie einen Druckausgleichsraum (44) und ein Entlüftungsventil (35) aufweist, **dadurch gekennzeichnet, dass**
das Entlüftungsventil (35) durch eine in Axialrichtung der Anschlußkupplung (10) gesteuerte, zum Einlaßventil (45) hin- und von diesem wegbewegliche Dichtscheibe (24) gebildet ist.

2. Anschlußkupplung nach Anspruch 1,
**dadurch gekennzeichnet, dass**
die Dichtscheibe (24) einen mittigen Durchlaß (24a) und an ihren beiden Stirnflächen ringbundartig abgesetzte Dichtkanten (24b) aufweist.

3. Anschlußkupplung nach Anspruch 2,
**dadurch gekennzeichnet, dass**
die Dichtkanten (24b) in Dichtstellung in innenseitige, gegenüberliegende Absätze (27a, 47a) in Ventilschiebern (27, 47) des Entlüftungs- und/oder Einlaßventils (35; 45) eingreifen.

4. Anschlußkupplung nach einem der Ansprüche 1 bis 3,
**dadurch gekennzeichnet, dass**
die Dichtscheibe (24) am Außenumfang geführt ist.

5. Anschlußkupplung nach einem der Ansprüche 1 bis 4,
**dadurch gekennzeichnet, dass**
am Außenumfang der Dichtscheibe (24) Durchtrittsschlitze (36) zum Druckausgleichsraum (44) vorgesehen sind.

6. Anschlußkupplung nach Anspruch 5,
**dadurch gekennzeichnet, dass**
die Durchtrittsschlitze (36) zum Druckausgleichsraum (44) in einem Führungsteil (47b) des Einlaßventils (45) eingefräst sind.

7. Anschlußkupplung nach einem der Ansprüche 1 bis 6,
**dadurch gekennzeichnet, dass**
die Dichtscheibe (24) aus PTFE oder Kupfer hergestellt ist.

8. Anschlußkupplung nach einem der Ansprüche 1 bis 7,
**dadurch gekennzeichnet, dass**
die Zuführleitung (12') und die Entlüftungsleitung (12") von einer als Handgriff ausgebildeten Gehäusekappe (48) zumindest teilweise umhüllt sind.

9. Anschlußkupplung nach einem der Ansprüche 1 bis 8,
**dadurch gekennzeichnet, dass**
der Druckausgleichsraum (44) als Ringraum ausgebildet ist, der mit der Entlüftungsleitung (12") über eine Bohrung (43) in Verbindung steht.

## Claims

1. A connection coupling for transferring gaseous and/or liquid fluids, especially for filling gas tanks of motor vehicles, comprising an inlet region (12) which comprises an inlet valve (45) and is connected with a supply line (12') and a ventilation line (12") and comprises a pressure compensation chamber (44) and a ventilation valve (35),
**characterized in that**
the ventilation valve (35) is formed by a sealing disk (24) which can be moved in the axial direction of the connection coupling (10) in a controlled manner towards the inlet valve (45) and away from the same.

2. A connection coupling according to claim 1, **characterized in that** the sealing disk (24) comprises a central pass-through (24a) and, on its two face sides, sealing edges (24b) which are offset like annular shoulders.

3. A connection coupling according to claim 2, **characterized in that** the sealing edges (24b) engage in the sealing position in inside, mutually opposite shoulders (27a, 47a) in valve slides (27, 47) of the ventilation and/or inlet valves (35; 45).

4. A connection coupling according to one of the claims 1 to 3, **characterized in that** the sealing disk (24) is guided on the outside circumference.

5. A connection coupling according to one of the claims 1 to 4, **characterized in that** pass-through slots (36) to the pressure compensation chamber (44) are provided on the outside circumference of the sealing disk (24).

6. A connection coupling according to claim 5, **characterized in that** the pass-through slots (36) to the pressure compensation chamber (44) are milled into a guide part (47b) of the inlet valve (45).

7. A connection coupling according to one of the claims 1 to 6, **characterized in that** the sealing disk (24) is made of PTFE or copper.

8. A connection coupling according to one of the claims 1 to 7, **characterized in that** the supply line (12') and the ventilation line (12") are enclosed at least partly by a housing cap (48) arranged as a handle.

9. A connection coupling according to one of the claims 1 to 8, **characterized in that** the pressure compensation chamber (44) is arranged as an annular space which is in connection with the ventilation line (12") via a bore (43).

## Revendications

1. Dispositif de raccordement par accouplement pour transférer des fluides gazeux et/ou liquides, notamment pour remplir les réservoirs de gaz de véhicules, comprenant une zone d'admission (12) présentant une soupape d'entrée (45), qui est raccordée à une conduite d'amenée (12') et à une conduite de ventilation (12") et présente un espace compensateur de pression (44) et une soupape de ventilation (35), **caractérisé en ce que** la soupape de ventilation (35) est formée par une garniture d'étanchéité (24) commandée dans la direction axiale du dispositif de raccordement par accouplement (10) et pouvant se déplacer vers la soupape d'admission (45) et s'en éloigner.

2. Dispositif de raccordement par accouplement selon la revendication 1, **caractérisé en ce que** la garniture d'étanchéité (24) présente un passage central (24a) et, sur ses deux faces frontales, des arêtes d'étanchéité (24b) étagées à la manière d'épaulements annulaires.

3. Dispositif de raccordement par accouplement selon la revendication 2, **caractérisé en ce que** les arêtes d'étanchéité (24b) s'encastrent, en position d'étanchéité, dans des décrochements intérieurs opposés (27a, 47a) de tiroirs (27, 47) de la soupape de ventilation et/ou d'admission (35 ; 45).

4. Dispositif de raccordement par accouplement selon l'une des revendications 1 à 3, **caractérisé en ce que** la garniture d'étanchéité (24) est guidée au niveau du pourtour extérieur.

5. Dispositif de raccordement par accouplement selon l'une des revendications 1 à 4, **caractérisé en ce que** des fentes de passage (36) communiquant avec l'espace compensateur de pression (44) sont ménagées sur le pourtour extérieur de la garniture d'étanchéité (24).

6. Dispositif de raccordement par accouplement selon la revendication 5, **caractérisé en ce que** les fentes de passage (36) communiquant avec l'espace compensateur de pression (44) sont fraisées dans une partie de guidage (47b) de la soupape d'admission (45).

7. Dispositif de raccordement par accouplement selon l'une des revendications 1 à 6, **caractérisé en ce que** la garniture d'étanchéité (24) est fabriquée en PTFE ou en cuivre.

8. Dispositif de raccordement par accouplement selon l'une des revendications 1 à 7, **caractérisé en ce que** la conduite d'amenée (12') et la conduite de ventilation (12") sont au moins en partie entourées d'un capot (48) réalisé en tant que poignée.

9. Dispositif de raccordement par accouplement selon l'une des revendications 1 à 8, **caractérisé en ce que** l'espace compensateur de pression (44) est réalisé en tant qu'espace annulaire qui communique avec la conduite de ventilation (12") via un perçage (43).
